(19) Europäisches Patentamt
European Patent Office
Office européen des brevets

(11) Publication number: **0 256 307 B1**

# (12) EUROPEAN PATENT SPECIFICATION

(45) Date of publication of the patent specification: **03.10.90**

(51) Int. Cl.[5]: **C07C 69/773,** C07C 69/92, C07C 43/205, C09K 19/12, G02F 1/13

(21) Application number: **87110102.8**

(22) Date of filing: **13.07.87**

(54) **Optically active compounds having biphenyl skeleton, liquid crystal composition and switching element containing them.**

(30) Priority: **15.07.86 JP 165895/86**

(43) Date of publication of application: **24.02.88 Bulletin 88/8**

(45) Publication of the grant of the patent: **03.10.90 Bulletin 90/40**

(84) Designated Contracting States: **CH DE GB LI**

(56) References cited:
**PATENT ABSTRACTS OF JAPAN, unexamined applications, C field, vol. 9, no. 104, 08 May 1985, The Patent Office Japanese Government, p. 108C279**
**PATENT ABSTRACTS OF JAPAN, unexamined applications, C field, vol. 10, no. 172, 18 June 1986, The Patent Office Japanese Government, p. 85C354**
**PATENT ABSTRACTS OF JAPAN, unexamined applications, C field, vol. 8, no. 251, 16 Nov 1984, The Patent Office Japanese Government; p. 17C252**
**PATENT ABSTRACTS OF JAPAN, unexamined applications, C field, vol. 9, no. 125, 30 May 1985, The Patent Office Japanese Government; p. 113C283**

(73) Proprietor: **Chisso Corporation, 6-32, Nakanoshima 3-chome Kita-ku, Osaka-shi Osaka-fu(JP)**

(72) Inventor: **Miyazawa, Kazutoshi, 12-14, Mutsuura 2-chome Kanazawa-ku, Yokohama-shi Kanagawa(JP)**
Inventor: **Ohno, Kouji, 10-2, Otsutomo-cho Kanazawa-ku, Yokohama-shi Kanagawa(JP)**
Inventor: **Inukai, Takashi, 4-46, Mori 3-chome Isogo-ku, Yokohama-shi Kanagawa(JP)**
Inventor: **Inoue, Hiromichi, 10-2, Otsutomo-cho Kanazawa-ku, Yokohama-shi Kanagawa(JP)**
Inventor: **Saito, Shinichi, 10-1, Otsutomo-cho Kanazawa-ku, Yokohama-shi Kanagawa(JP)**

(74) Representative: **Hansen, Bernd, Dr.rer.nat. et al, Hoffmann, Eitle & Partner Patentanwälte Arabellastrasse 4 Postfach 81 04 20, D-8000 München 81(DE)**

EP 0 256 307 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

FIELD OF THE INVENTION

The present invention relates to novel optically active compounds and liquid crystal compositions containing the same. More particularly, it is concerned with chiral liquid crystal compounds having an optically active group and chiral liquid crystal compositions containing the same.

BACKGROUND OF THE INVENTION

The TN (Twisted Nematic) type display mode is now most widely used as a liquid crystal display element. This is, however, inferior in response rate to an emissive type display element (e.g., electroluminescence and plasma display). Various attempts have been made to improve the response rate. It does not seem, however, that there is a possibility of a great improvement being made.

Under such circumstances, various liquid crystal display elements based on different principles from that of the TN type display element have been proposed. One is a display mode utilizing ferroelectric liquid crystals (see, for example, N.A. Clark et al., Applied Phys. Lett., 36, 899 (1988)). This mode utilizes the chiral smectic phase, such as the chiral smectic C phase (hereinafter referred to as "SC* phase") and the chiral smectic H phase (hereinafter referred to as "SH* phase"), of ferroelectric liquid crystals. Desired, therefore, are liquid crystal materials in which the above phases are in a broad range and further in the neighborhood of room temperature.

The present inventors have already discovered that compounds represented by the general formula (II):

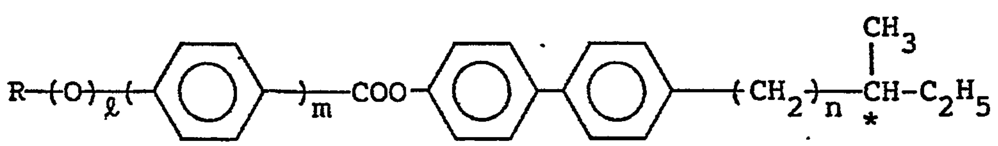

(II)

(wherein ℓ and m are each 0 or 1, n is 1, 2 or 3, R is a straight or branched alkyl group having 1 to 18 carbon atoms, and * indicates that the carbon atom provided with * is an optically active carbon atom) are suitable for use in the above display mode [see Japanese Patent Application No. 106100/83 corresponding to Japanese Patent Application (OPI) No. 231043/85 (the term "OPI" as used herein refers to a "published unexamined patent application")]. In addition, the present inventors have discovered that compounds represented by the general formula (III):

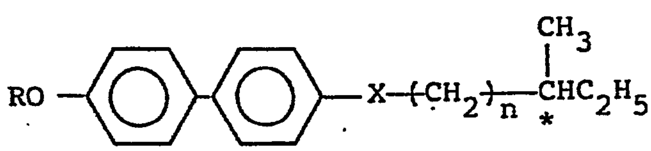

(III)

(wherein R is a straight or branched alkyl group having 1 to 18 carbon atoms, X is -O- (an oxygen atom), -CO- or $-CH_2-$, n is 0, 1 or 2, and * indicates that the carbon atom provided with * is an optically active carbon atom) are also suitable for use in the above display mode (see Japanese Patent Application No. 121769/83 corresponding to Japanese Patent Application (OPI) No. 13729/85).

SUMMARY OF THE INVENTION

The present invention provides chiral smectic liquid crystal compounds which are more useful than the above compounds as a component of chiral smectic liquid crystal compositions.

The present invention relates to optically active compounds represented by the general formula (I):

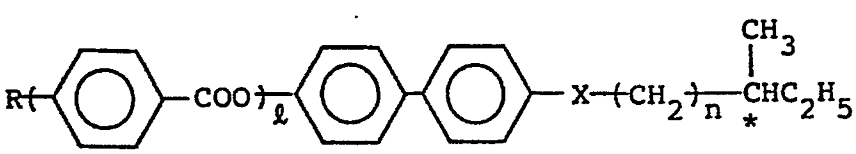

(I)

wherein R is an alkyl group having 1 to 18 carbon atoms or an alkyloxy group having 1 to 18 carbon atoms, X is a single bond or -O- (an oxygen atom), ℓ is 0 or 1, when X is a single bond, n is an integer of 4 to 12, when X is -O- and ℓ=0, n is an integer of 3 to 12, and when X is -O- and ℓ=1, n is an integer of 2 to 12, and * indicates that the carbon atom provided with * is an asymmetrical carbon atom.

In addition, the present invention relates to chiral smectic liquid crystal compositions comprising at least one of the above optically active compounds.

Furthermore, the present invention relates to optical switching elements using as a liquid crystal the above chiral smectic liquid crystal compositions.

## DETAILED DESCRIPTION OF THE INVENTION

The phase transition points of typical compounds of the present invention are shown in Table 1 below.

**Table 1**

| Compound No. | General Formula (I) | | | | Phase Transition Point (°C) | | | | | | | | Remarks |
|---|---|---|---|---|---|---|---|---|---|---|---|---|---|
| | n | ℓ | X | R | C | SH* | SG* | SF* | SI* | SC* | Ch | I | |
| 1 | 4 | 0 | single bond | $C_5H_{11}O$ | • 42.4 | – | • 50.0 | • 69.3 | – | – | – | • | |
| 2 | 4 | 0 | single bond | $C_6H_{13}O$ | • 47.0 | – | • 48.7 | • 73.3 | – | – | – | • | |
| 3 | 4 | 0 | single bond | $C_7H_{15}O$ | • *1) | – | • 40.0 | • 69.8 | – | – | – | • | |
| 4 | 4 | 1 | single bond | $C_5H_{11}$ | • 93.4 | – | (• 88.2 | • 90.2) | – | • 105.5 | • 139.2 | • | |
| 5 | 4 | 1 | single bond | $C_8H_{17}$ | • 83.0 | (• 59.0 | • 74.5) | • 86.5 | – | • 117.6 | • 132.1 | • | |
| 6 | 4 | 1 | single bond | $C_8H_{17}O$ | • 95.0 | – | – | – | – | • 138.7 | • 159.1 | • | |
| 7 | 4 | 1 | single bond | $C_{10}H_{21}O$ | • 79.5 | • 85.4 | – | – | – | • 143.2 | • 154.1 | • | |
| 8 | 5 | 0 | single bond | $C_3H_7O$ | • 11.8 | – | • 64.6 | – | – | – | – | • | |
| 9 | 5 | 0 | single bond | $C_5H_{11}O$ | • 45.0 | – | • 57.5 | – | • 62.7 | – | – | • | |
| 10 | 5 | 0 | single bond | $C_6H_{13}O$ | • 36.0 | – | (• 35.0) | – | • 65.4 | – | – | • | |
| 11 | 5 | 0 | single bond | $C_7H_{15}O$ | • 18.0 | – | (• 17.0) | – | • 62.9 | – | – | • | Example 2 |
| 12 | 5 | 1 | single bond | $C_8H_{17}$ | • 64.5 | (• 50.5 | • 58.8) | • 79.0 | – | • 113.6 | • 128.0 | • | |
| 13 | 5 | 1 | single bond | $C_8H_{17}O$ | • 78.5 | – | – | – | – | • 135.9 | • 154.7 | • | Example 1 |
| 14 | 5 | 0 | -O- | $C_{10}H_{21}$ | • 64.0 | – | • 93.7 | – | – | • 97.7 | – | • | |
| 15 | 3 | 0 | -O- | $C_8H_{17}$ | • 27.0 | – | • 62.4 | – | – | – | – | • | |
| 16 | 3 | 0 | -O- | $C_{10}H_{21}O$ | • 61.5 | – | • 91.0 | – | – | • 93.2 | – | • | |

In Table 1, *1) indicates that no crystallization occurs, and the chiral smectic G phase is shown at room temperature. The absolute configuration is S in all of Compound Nos. 1 to 16. The symbol • and the numeral on the right side thereof in the columns of the respective phases of the Table indicate a phase transition point from a phase to that on the right side thereof. The parentheses ( ) indicate a monotropic phase transition temperature.

Almost all of the compounds of the general formula (I) exhibit, as a single compound, chiral smectic phase at a broad temperature range. In the compounds of the present invention, it is preferred that the asymmetrical carbon atom of the optical active group be apart from the central skeleton. It is, therefore, preferred that n be larger. The above-cited reference, Japanese Patent Application (OPI) No. 231043/84, discloses a compound having the following formula:

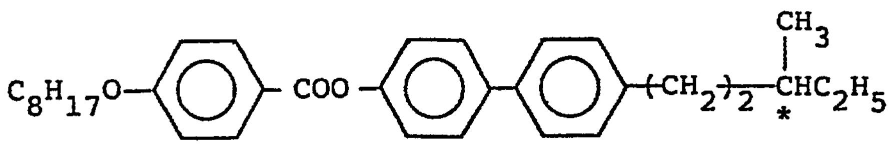

This compound corresponds to a compound of the present invention that in the general formula (I) R is $C_8H_{17}O$, X is a single bond, $\ell$=1 and n=2. Phase transition points of the compound are as follows:

$$C \xleftrightarrow{75.3^\circ C} SC^* \xleftrightarrow{126.8^\circ C} Ch \xleftrightarrow{160.6^\circ C} I$$

On contrast, Compound No. 13 (Example 1) of the present invention that in the general formula (I) R is $C_8H_{17}O$, X is a single bond, $\ell$=1 and n=5 has the following phase transition points.

$$C \xleftrightarrow{78.5^\circ C} SC^* \xleftrightarrow{135.9^\circ C} Ch \xleftrightarrow{154.7^\circ C} I$$

That is, the temperature range of the SC* phase is broad, which is a very preferred property as a component of the chiral smectic C liquid crystal composition.

The liquid crystal composition of the present invention may be composed of a plurarity of compounds of the general formula (I) alone. The compounds of the general formula (I) may be mixed with other smectic liquid crystals to obtain chiral smectic liquid crystal compositions. Good liquid crystal composition showing the SC* phase can be prepared by mixing, in particular, smectic C liquid crystals and compounds of the general formula (I) showing the SC* phase.

Smectic C liquid crystals include 5-alkyl-2-(4′-alkoxyphenyl)pyrimidine compounds such as 5-octyl-2-(4′-octyloxyphenyl)pyrimidine, 5-octyl-2-(4′-nonyl oxyphenyl)pyrimidine and 5-octyl-2-(4′-decyloxyphenyl)pyrimidine; 5-alkyl-2-(4′-alkoxyphenyl)pyridine compounds such as 5-heptyl-2-(4′-octyloxyphenyl)pyridine, 5-octyl-2-(4′-octyloxyphenyl)pyridine, 5-heptyl-2-(4′-nonyloxyphenyl)pyridine and 5-nonyl-2-(4′-nonyloxyphenyl)pyridine; 5-octyl-2-(4′-hexyl-4-biphenylyl)pyrimidine compounds; and 4-alkoxyphenyl 4-alkoxybenzoate compounds such as 4-octyloxyphenyl 4-octyloxybenzoate, 4-nonyloxyphenyl 4-octyloxybenzoate and 4-decyloxyphenyl 4-nonyloxybenzoate.

The compounds of the general formula (I) have an optically active carbon atom and, therefore, are capable of inducing a twisted structure when added to nematic liquid crystals. Nematic liquid crystals having the twisted structure, i.e., chiral nematic liquid crystals do not produce so-called reverse domains in the TN type display element and, therefore, the compounds can be used as agents for preventing the formation of reverse domains.

Racemates corresponding to the compounds of the general formula (I), which are outside the scope of the present invention, can be prepared in the same manner as in the preparation of optically active compounds of the general formula (I) as shown below except that the optically active alcohol is replaced with the corresponding racemic alcohol. These racemates exhibit phase transition points which are nearly the same as those of the optically active compounds of the general formula (I). This racemate does not show the spiral structure and therefore is different from that of the optically active compounds of the general formula (I) in that when the racemate is added to optically active liquid crystal compositions, it does not inhibit their characteristics and decreases the spiral pitch of the composition.

A process for the preparation of the compounds of the general formula (I) of the present invention will hereinafter be explained.

For convenience, the compounds of the general formula (I) are divided into four groups depending on the type of X and the value of $\ell$.

X=a single bond, and $\ell$=0

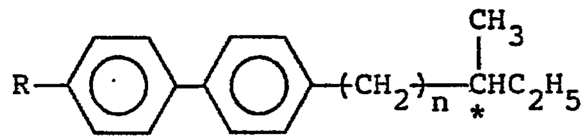

(Ia)

wherein n is an integer of 4 to 12.

X=-O-, and $\ell$=0

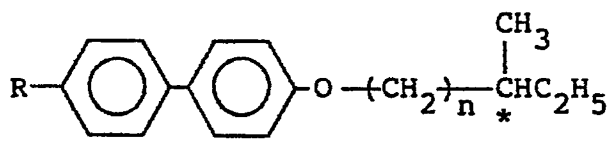

(Ib)

wherein n is an integer of 3 to 12.

X=a single bond, and $\ell$=1

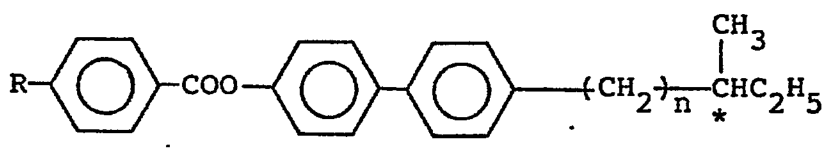

(Ic)

wherein n is an integer of 4 to 12.

X=-O-, $\ell$=1

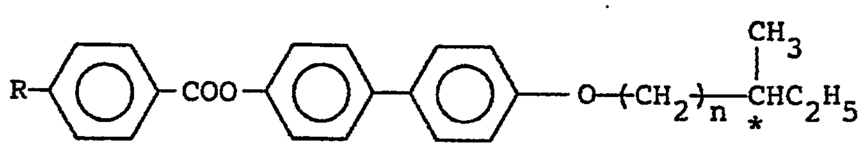

(Id)

wherein n is an integer of 2 to 12.

The compounds of the formula (Ia) can be synthesized according to the following schemes.
(i) R=an alkyl group

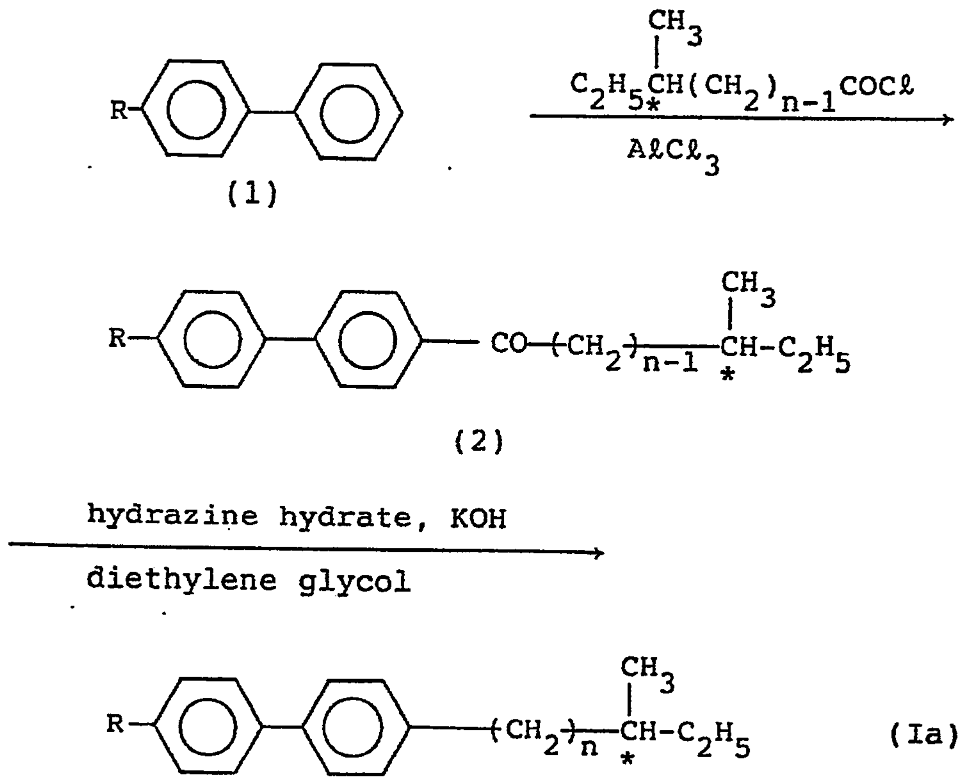


(1)

(2)

(Ia)

(ii) R=an alkyloxy group

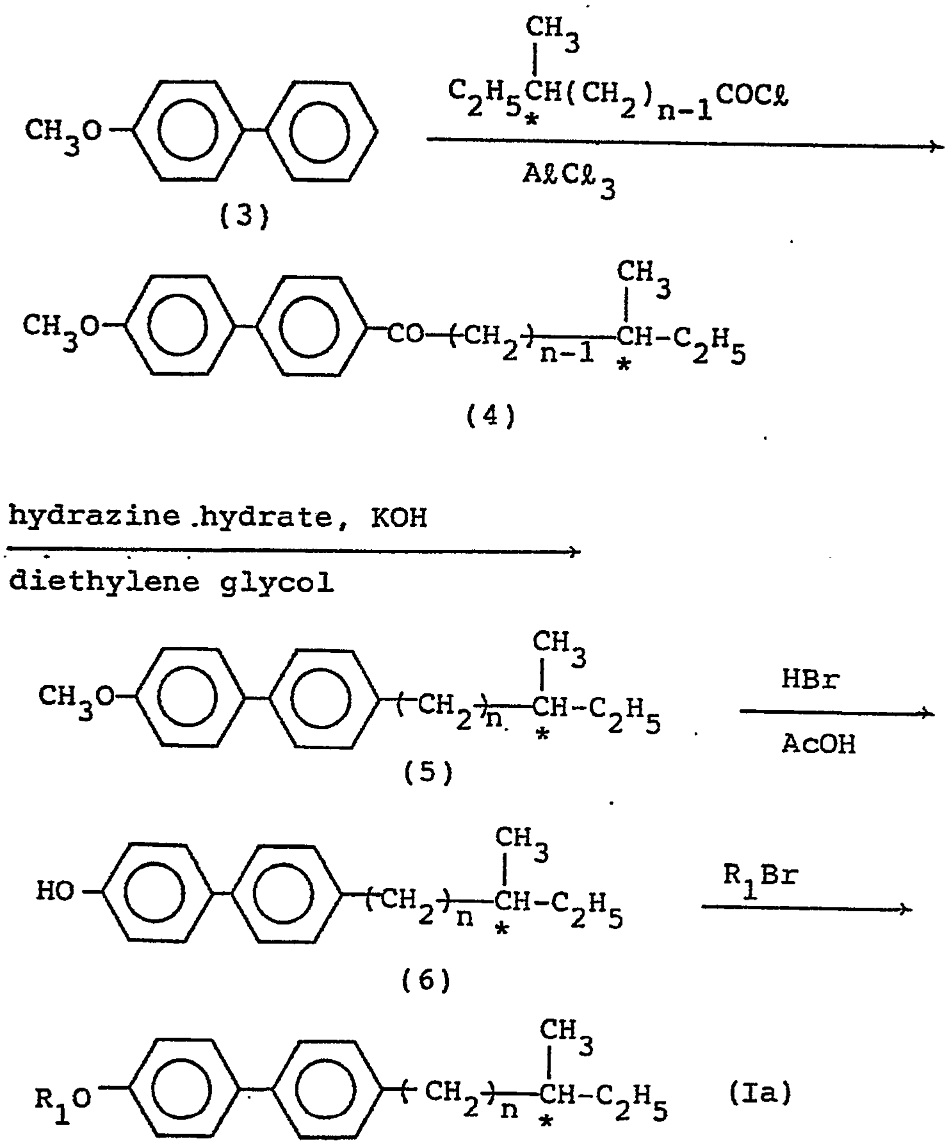


(3)

(4)

(5)

(6)

(Ia)

wherein $R_1$ is an alkyl group.

When R of the general formula (I) is an alkyl group, the halide of n-methylalkanoic acid which has been synthesized by known methods (Mol. Cryst. Liq. Cryst., Vol. 114, pp. 237-247 (1984)) reacts with 4-alkylbiphenyl (1) in the presence of a catalyst such as anhydrous aluminum chloride and further is subjected to Wolff-Kishner reduction to obtain the compounds of the formula (Ia).

When R of the general formula (I) is an alkoxy group, the halide of n-methylalkanoic acid is reacted with 4-methoxybiphenyl (3) to form a compound (4), which is then subjected to Wolff-Kishner reduction to convert it into a compound (5), and the compound (5) is converted into a compound (6) under the action of hydrobromic acid. The compound (6) further reacts with alkyl halide to obtain the compound of the formula (Ia).

The compounds of the formula (Ib) among the compounds of the general formula (I) are synthesized by the following scheme.

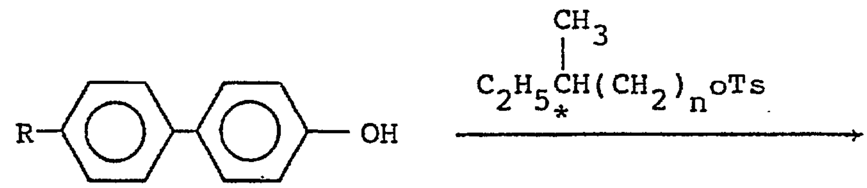

(7)

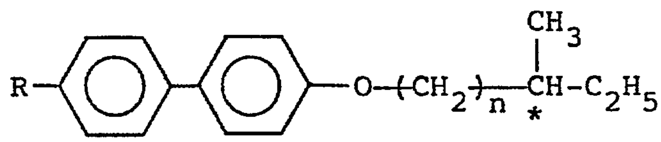

(Ib)

That is, 4-hydroxy-4'-alkylbiphenyl or 4-hydroxy-4'-alkoxybiphenyl (7) reacts with the tocylate or halide of n-methylalkanol which has been synthesized by known methods (Mol. Cryst. Liq. Cryst. Vol. 114, pp. 237-247 (1984)), to obtain the compound of the formula (Ib).

Among the compounds of the general formula (I), the compounds of the formula (Ic) are synthesized by the following scheme.

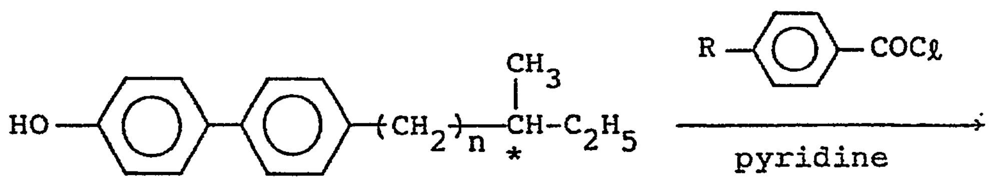


(6)

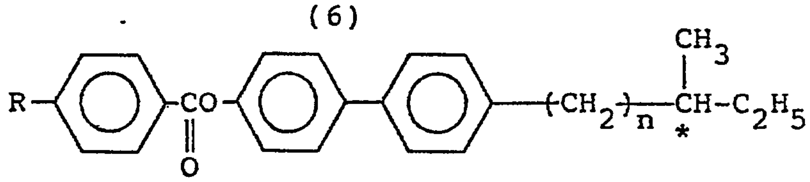

(Ic)

That is, the compound (6) as an intermediate of the compound of the above formula (Ia) reacts with 4-alkylbenzoic acid halide or 4-alkoxybenzoic acid halide in a basic solvent such as pyridine to obtain the compound of the formula (Ic).

Among the compounds of the general formula (I), the compounds of the formula (Id) are synthesized by the following scheme.

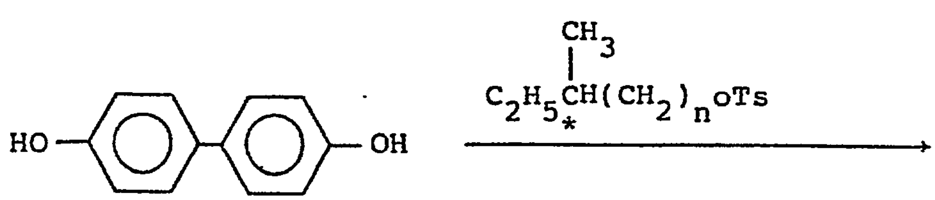

(8)

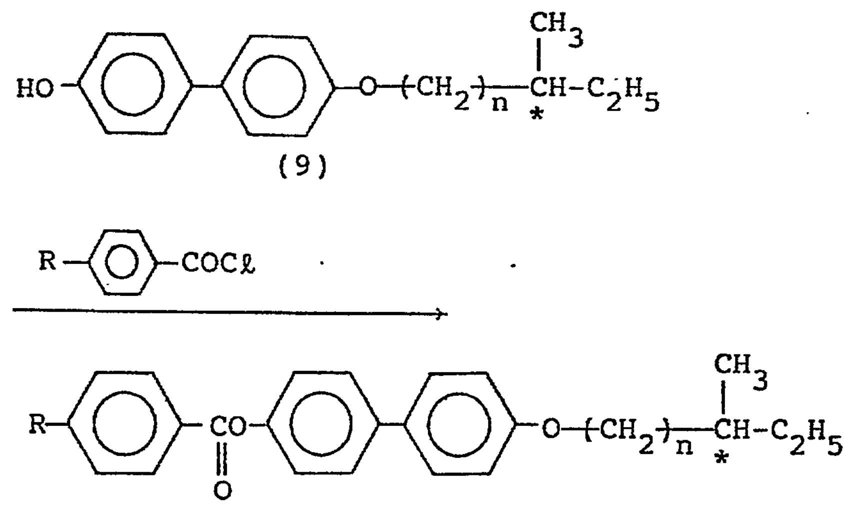

(9)

(Id)

That is, 4,4'-dihydroxybiphenyl (8) reacts with the tosylate or halide of n-methyl branched alkanol to form a compound (9), which then reacts with 4-alkylbenzoic acid halide or 4-alkoxybenzoic acid halide in the presence of a basic solvent such as pyridine to thereby obtain the compound of the formula (Id).

The present invention will be explained in greater detail with reference to the following examples, but the present invention should not be construed as being limited thereto. In the examples, only S-type optically active compounds are used as the starting material, but even when R-type optically active compounds are used, those having the same phase transition temperature can be obtained. This is natural from a theoretical standpoint. However, the sign of optical rotation, the twist direction of the spiral and the direction of spontaneous polarization in the S-type are opposite to those of the R-type.

EXAMPLE 1

Preparation of Optically active S-Octyloxybenzoic Acid 4-(6"-Methyloctyl)-4'-Biphenylyl Ester (in the general formula (I), n=5, ℓ=1, X=a single bond, R=$C_9H_{17}O$; Compound No. 13)

(i) Preparation of S-4-Methoxy-4'-(5"-methylheptylcarbonyl)biphenyl

190 g of anhydrous aluminum chloride and 500 g of carbon disulfide were placed in a sufficiently dried flask. A solution of 250 g (1.32 mol) of 4-methoxybiphenyl and 240 g (1.36 mol) of S-6-methyloctanoylchloride in 500 g of carbon disulfide was dropwise added to the flask while cooling with ice, and the resulting mixture was further stirred at room temperature for 2 hours and then refluxed at about 40°C for 2 hours and was allowed to stand overnight. The reaction mixture was poured carefully in an aqueous hydrochloric acid solution, and carbon disulfide was distilled away. Precipitated crystals were filtered off and recrystallized from ethanol to obtain 212 g of S-4-methoxy-4'-(5"-methylheptylcarbonyl)biphenyl.

(ii) Preparation of S-4-Methoxy-4'-(6"-methyloctyl)biphenyl

160 g (0.5 mol) of S-4-methoxy-4'-(5"-methylheptylcarbonyl)biphenyl and 140 ml of 80% aqueous solution of hydrazine hydrate were added to 1,000 ml of diethylene glycol and heated with stirring, maintained at 120°C for 1 hour and cooled. While maintaining at 50°C, a solution of 60 g (1.22 mol) of potassium hydroxide in 30 ml of water was added at the same time. A low boiling fraction was distilled away so that the temperature of the system reached 200°C, and then the resulting mixture was maintained at 200°C for 4 hours and cooled. Then water and toluene were added, and the reaction mixture was extracted with them. An organic layer was washed with water until it became neutral. Then the toluene was distilled away. The residue was distilled under reduced pressure, and the distillate was recrystallized from ethanol to obtain 110 g of S-4-methoxy-4'-(6"-methyloctyl)biphenyl.

(iii) Preparation of S-4-Hydroxy-4'-(6"-methyloctyl)biphenyl

110 g (0.35 mol) of S-4-hydroxy-4'-(6"-methyloctyl)biphenyl was dissolved in 900 ml of acetic acid, and 600 ml of 47% hydrobromic acid was added. The resulting mixture was heated and refluxed with stirring for 40 hours. The reaction mixture was cooled and poured into ice water. Precipitated crystals were collected and recrystallized from n-heptane to obtain 66 g of S-4-hydroxy-4'-(6"-methyloctyl)biphenyl.

(iv) Preparation of Objective Compound

30 g (0.10 mol) of S-4-hydroxy-4'-(6"-methyloctyl)biphenyl was dissolved in 175 ml of dry pyridine. 25 g (0.092 mol) of 4-n-octyloxybenzoic acid chloride was dropwise added while cooling with ice, and the resulting mixture was placed in a water bath, maintained at 50-60°C for 2 hours and then was allowed to stand overnight. Water and toluene were added and well stirred. An organic layer was washed with 6N hydrochloric acid, with water, with a 2N aqueous sodium hydroxide solution and further with water until it became neutral.

The organic layer was dried, and the toluene was distilled away. The residue was recrystallized from ethanol to obtain the objective compound, S-4-octyloxybenzoic acid 4-(6"-methyloctyl)-4'-biphenylyl ester. The phase transition points of the compound were as follows:

C-SC* point 78.5°C; SC*-Ch point 135.9°C; Ch-I point: 154.7°C

Elemental Analysis

| | Found | Calculated ($C_{36}H_{48}O_3$) |
|---|---|---|
| C | 81.10% | 81.77% |
| H | 9.00% | 9.08% |

The found values are in good agreement with the calculated.

Various optically active 4-alkylbenzoic acid 4-(n"-methylalkyl)-4'-biphenylyl ester or 4-alkoxybenzoic acid 4-(n"-methylalkyl)-4'-biphenylyl ester of the general formula (I) can be obtained by using various optically active n-methylalkanic acid chlorides in place of S-6-methyloctanic acid chloride used in (i) or by using various 4-alkylbenzoic acid chlorides or 4-alkoxybenzoic acid chlorides in place of 4-n-octyloxybenzoic acid chloride used in (iv). The phase transition points of these compounds are shown in Table 1.

EXAMPLE 2

Preparation of Optically Active S-4-Heptyloxy-4'-(6"-methyloctyl)biphenyl (in the general formula (I), n=5, ℓ=0, X=a single bond, R=$C_7H_{15}O$; Compound No. 11)

9.0 g (0.03 mol) of 4-hydroxy-4'-(6"-methyloctyl)biphenyl prepared in (iii) of Example 1 and 1.7 g (0.03 mol) of potassium hydroxide were dissolved in 30 ml of ethanol, and 6.0 g (0.033 mol) of heptyl bromide was dropwise added while stirring under reflux. The resuslting mixture was further refluxed for 4 hours and then was allowed to cool. Then water and toluene were added, and the resulting mixture was stirred. Then an organic layer was fully washed with a 2N aqueous sodium hydroxide solution. The organic layer was washed with water until it became neutral and dried, and then toluene was distilled away. The residue was recrystallized from ethanol to obtain the objective compound, S-4-heptyloxy-4'-(6"-methyloctyl)biphenyl. The phase transition points of the compound were C-SI* point 18.0°C and SI*-I point: 62.9°C. On cooling the compound, the SG* phase appeared, and its transition point: was SI*-SG* point 17.0°C.

Elemental Analysis

| | Found | Calculated ($C_{28}H_{42}O$) |
|---|---|---|
| C | 85.10% | 85.21% |
| H | 10.50% | 10.73% |

Various optically active 4-alkyloxy-4'-(6"-methyloctyl)biphenyls can be obtained by using various alkyl bromides in place of n-heptyl bromide. These phase transition points are shown in Table 1.

EXAMPLE 3 (APPLICATION EXAMPLE 1)

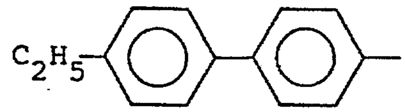

20 wt%

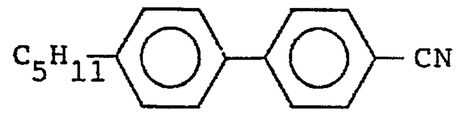

40 wt%

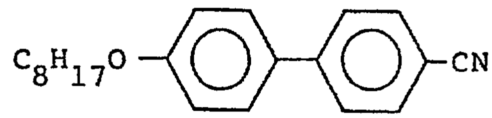

25 wt%

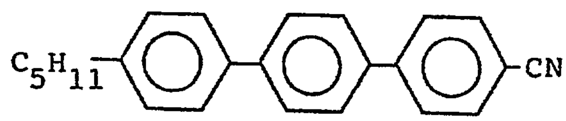

15 wt%

A nematic liquid crystal composition consisting of the above ingredients was injected into a cell provided with transparent electrodes, the distance between the electrodes being 10 μm, which had been coated with polyvinyl alcohol (PVA) as an aligning agent and had been subjected to parallel aligning treatment by rubbing the surface thereof, to thereby produce a TN type display cell. This was observed under a polarizing microscope and it was found that reverse twisted domains were formed.

To the above nematic liquid crystal composition was added 1% by weight of a compound having the following formula:

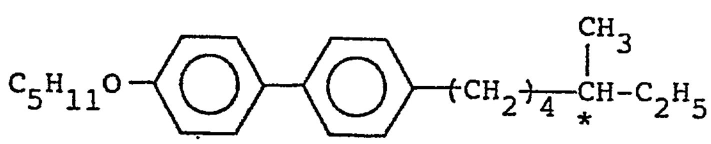

(in the general formula (I) of the present invention, n=4, ℓ=0, X=a single bond and R=$C_5H_{11}O$; Compound No.1)

Examination of the resulting composition as a TN type cell in the same manner as in above showed that the reverse twisted domains disappeared; a uniform nematic phase was observed.

EXAMPLE 4 (APPLICATION EXAMPLE 2)

A liquid crystal composition having the formulation shown below was prepared using liquid crystal compound Nos. 7, 13 and 14 of the present invention, other chiral smectic liquid crystal compounds and nematic liquid crystal compounds.

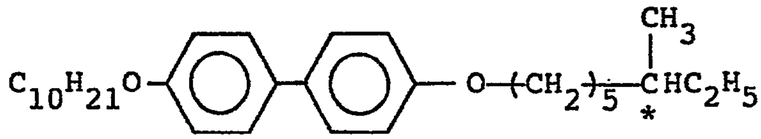

(Compound No. 14) 20 wt%

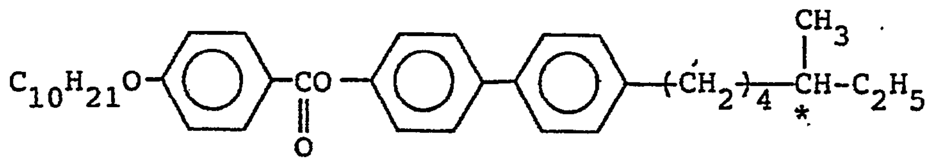

(Compound No. 7) 10 wt%

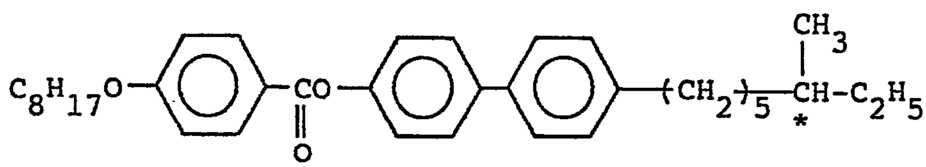

(Compound No. 13) 10 wt%

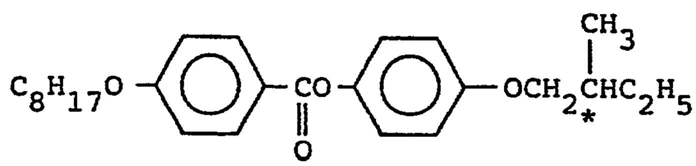

10 wt%

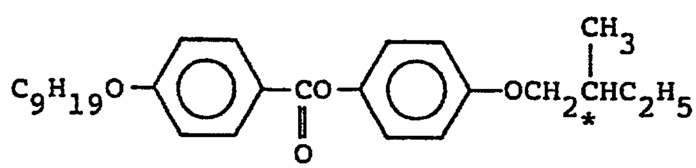

20 wt%

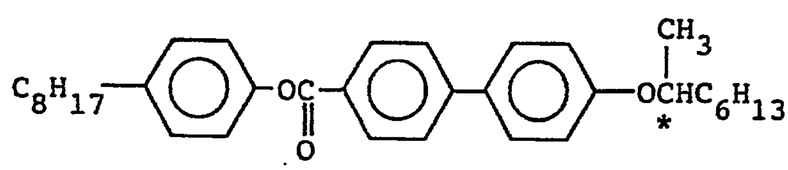

20 wt%

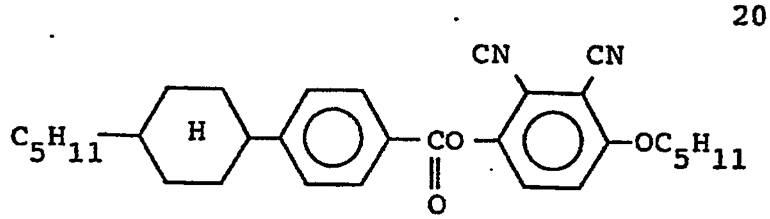

10 wt%

In the preparation of the above composition, the above seven liquid crystal compounds were weighed and then mixed while heating and melting in a sample bottle.

The composition was injected into a cell, the cell thickness being 2 µm, provided with transparent electrodes, which had been coated with PVA as aligning agent and had been subjected to parallel aligning.

treatment by rubbing the surface thereof. This liquid crystal element was placed between two polarizers crossed at right angles, and an electric field was applied. At 20 V, a change in transmission light intensity was observed.

The response time was determined based on the change in transmission light intensity and found to be about 0.4 msec at 25°C.

With regard to the above liquid crystal composition, a change of texture by varying temperature was examined by the use of a polarizing microscope. It was found that the composition became ferroelectric liquid crystal in the temperature range of 0 to 60°C. The degree of the spontaneous polarization was 12 nC/cm² at 25°C and the tilt angle was 23°.

EXAMPLE 5 (APPLICATION EXAMPLE 3)

A liquid crystal composition having a non-chiral SC phase and the formulation shown below was prepared.

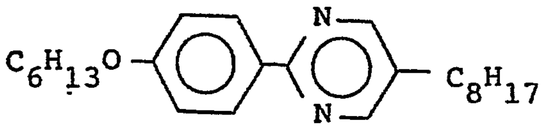
30 wt%

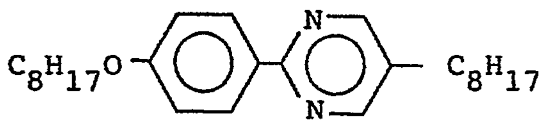
20 wt%

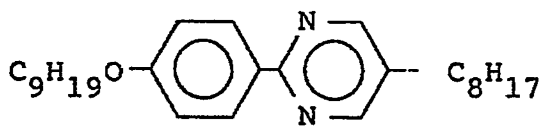
10 wt%

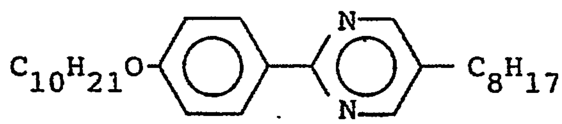
10 wt%

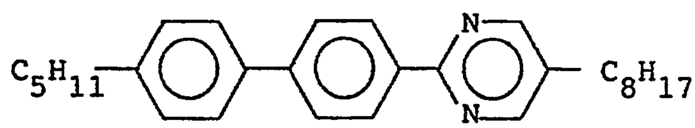
20 wt%

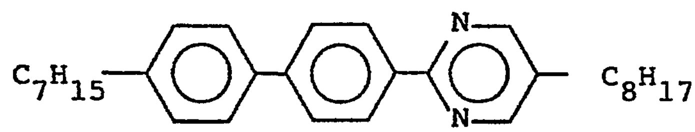
10 wt%

The composition showed the SC phase in the temperature range of 4 to 65°C, the SA phase in the temperature range of more than 65°C, and became the N phase at 79°C and an isotropic liquid at 90°C.

To the composition were added 10% by weight of a compound of the present invention having the following formula:

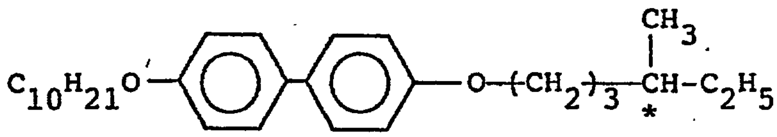

(Compound No. 16)

and 10% by weight of a compound of the present invention having the following formula:

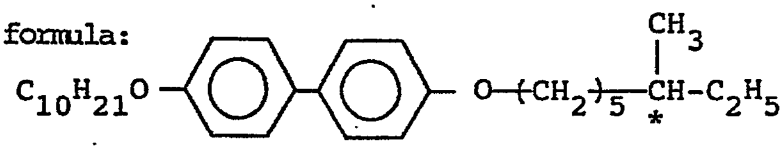

(Compound No. 14).

In the resulting composition, the SC* phase showing ferroelectric properties appeared in the temperature range of 5 to 70°C.

The resulting composition was injected into a cell, the cell thickness being 2µm, provided with transparent electrodes, which had been coated with PVA as aligning agent and had been subjected to parallel aligning treatment by rubbing the surface thereof. This liquid crystal element was placed between two polarizers crossed at right angles, and an electric field was applied. At 20 V, a change in transmission light intensity was observed.

The response time was determined based on the change in transmission light intensity and found to be about 1.7 msec at 25°C.

It was found that when the compounds of the present invention were added to compounds (or compositions) having the SC phase not showing ferroelectric properties, there can be obtained a ferroelectric liquid crystal composition showing very high response properties.

EXAMPLE 6 (APPLICATION EXAMPLE 4)

A composition having the formulation below was prepared using the compounds of the present invention and other chiral smectic liquid crystals.

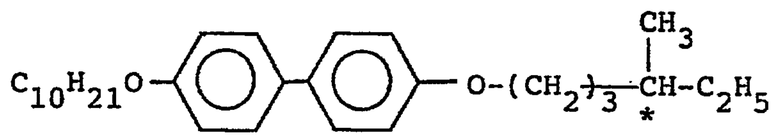

(Compound No. 16) 30 wt%

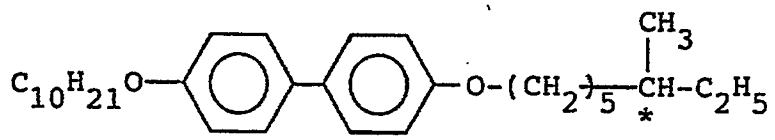

(Compound No. 14) 30 wt%

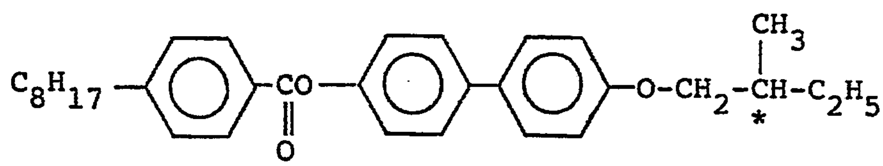

10 wt%

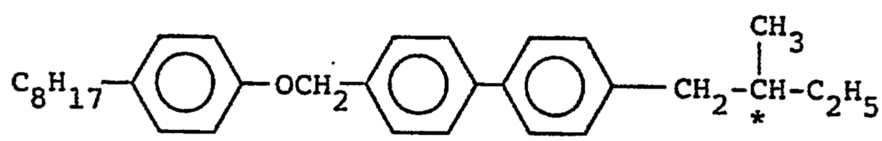

10 wt%

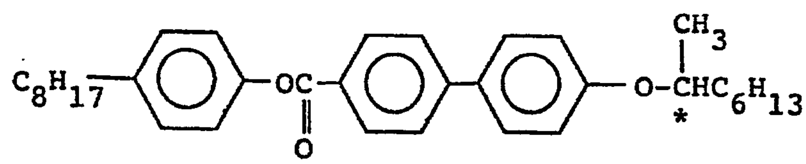

15 wt%

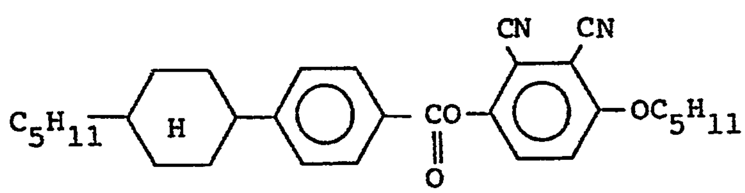

The composition was injected into a cell, the cell thickness being 2 μm, which had been treated in the same manner as in Example 5. This liquid crystal element was placed between two polarizers crossed at right angles, and an electric field was applied. At 20 V, a change in transmission light intensity was observed.

The response time was determined based on the change in transmission light intensity and found to be about 0.4 msec at 25°C.

With regard to the liquid crystal composition, a change of texture by varying temperature was examined by the use of a polarizing microscope. It was found that the composition became a ferroelectric liquid crystal in the temperature range of 23 to 52°C. The degree of the spontaneous polarization was 8 $nC/cm^2$ at 25°C and the tilt angle was 27°.

While the invention has been described in detail and with reference to specific embodiments thereof, it will be apparent to one skilled in the art that various changes and modifications can be made therein without departing from the spirit and scope thereof.

## Claims

1. An optically active compound represented by the general formula (I):

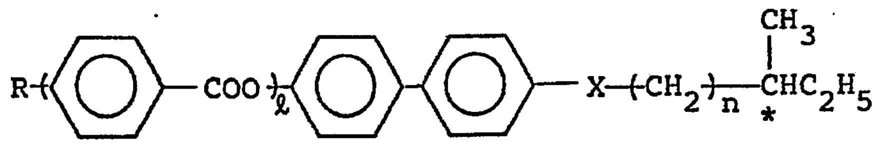 (I)

wherein R is an alkyl group having 1 to 18 carbon atoms or an alkyloxy group having 1 to 18 carbon atoms, X is a single bond or -O- (an oxygen atom), $\ell$ is 0 or 1, when X is a single bond, n is an integer of 4 to 12, when X is -O- and $\ell$=0, n is an integer of 3 to 12, and when X is -O- and $\ell$=1, n is an integer of 2 to 12, and * indicates that the carbon atom provided with * is an asymmetrical carbon atom.

2. An optically active compound as claimed in Claim 1, wherein X is a single bond, $\ell$ is 0, and n is an integer of 4 to 12.

3. An optically active compound as claimed in Claim 1, wherein X is a single bond, $\ell$ is 1 and n is an integer of 4 to 12.

4. An optically active compound as claimed in Claim 1, wherein X is -O-, $\ell$ is 0 and n is an integer of 3 to 12.

5. An optically active compound as claimed in Claim 1, wherein X is -O-, $\ell$ is 1 and n is an integer of 2 to 12.

6. A chiral smectic liquid crystal composition comprising at least one optically active compound represented by the general formula (I):

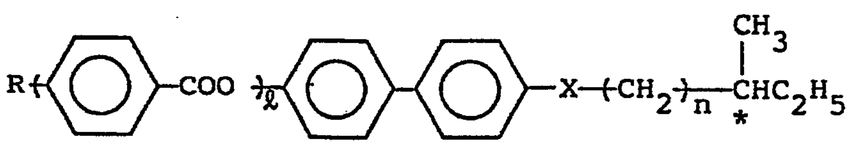 (I)

wherein R is an alkyl group having 1 to 18 carbon atoms or an alkyloxy group having 1 to 18 carbon atoms, X is a single bond or -O- (an oxygen atom), $\ell$ is 0 or 1, when X is a single bond, n is an integer of 4 to 12, when X is -O- and $\ell$=0, n is an integer of 3 to 12, and when X is -O- and $\ell$=1, n is an integer of 2 to 12, and * indicates that the carbon atom provided with * is an asymmetrical carbon atom.

7. An optical switching element using as a liquid crystal a chiral smectic liquid crystal composition comprising at least one optically active compound represented by the general formula (I):

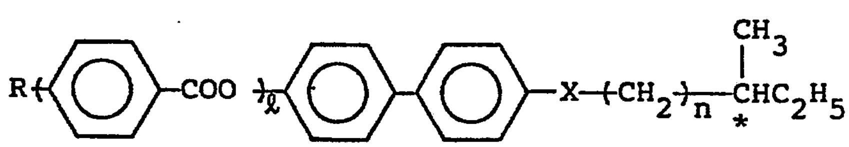 (I)

wherein R is an alkyl group having 1 to 18 carbon atoms or an alkyloxy group having 1 to 18 carbon atoms, X is a single bond or -O- (an oxygen atom), $\ell$ is 0 or l, when X is a single bond, n is an integer of 4 to 12, when X is -O- and $\ell$=0, n is an integer of 3 to 12, and when X is -O- and $\ell$=1, n is an integer of 2 to 12, and * indicates that the carbon atom provided with * is an asymmetrical carbon atom.

## Patentansprüche

1. Optisch aktive Verbindung, dargestellt durch die allgemeine Formel (I)

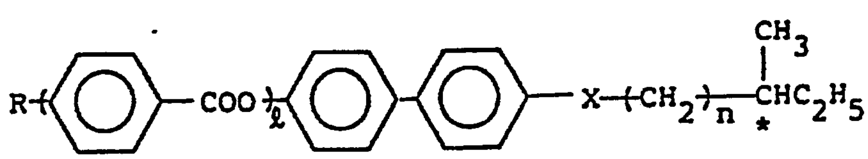 (I)

in der R eine Alkylgruppe mit 1 bis 18 Kohlenstoffatomen oder eine Alkyloxygruppe mit 1 bis 18 Kohlenstoffatomen ist, X eine Einfachbindung oder –O– (ein Sauerstoffatom) ist, l 0 oder 1 ist, wenn X eine Einfachbindung ist, n eine ganze Zahl von 4 bis 12 ist, wenn X –O– und l = 0 ist, n eine ganze Zahl von 3 bis 12 ist, und wenn X –O– und l = 1 ist, n eine ganze Zahl von 2 bis 12 ist, und * das asymmetrische Kohlenstoffatom bezeichnet.

2. Optisch aktive Verbindung gemäss Anspruch 1, in der X eine einfachbindung, l = 0 und n eine ganze Zahl von 4 bis 12 ist.

3. Optisch aktive Verbindung gemäss Anspruch 1, in der X eine einfachbindung, l 1 und n eine ganze Zahl von 4 bis 12 ist.

4. Optisch aktive Verbindung gemäss Anspruch 1, in der X –0–, l 0 und n eine ganze Zahl von 3 bis 12 ist.

5. Optisch aktive Verbindung gemäss Anspruch 1, in der X –0–, l 1 und n eine ganze Zahl von 2 bis 12 ist.

6. Chirale, smektische Flüssigkristallzusammensetzung, umfassend wenigstens eine optisch aktive Verbindung, dargestellt durch die allgemeine Formel (I)

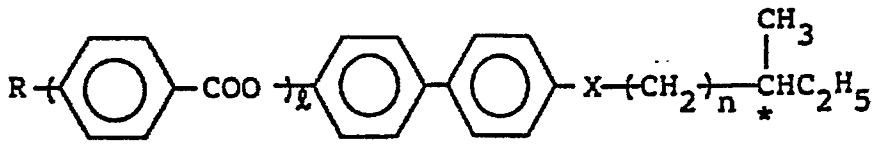 (I)

in der R eine Alkylgruppe mit 1 bis 18 Kohlenstoffatomen oder eine Alkyloxygruppe mit 1 bis 18 Kohlenstoffatomen ist, X eine einfachbindung oder –0– (ein Sauerstoffatom) ist, l 0 oder 1 ist, wenn X eine einfachbindung ist, n eine ganze Zahl von 4 bis 12 ist, wenn X –0– und l = 0 ist, n eine ganze Zahl von 3 bis 12 ist, und wenn X –0– und l = 1 ist, n eine ganze Zahl von 2 bis 12 ist, und * das asymmetrische Kohlenstoffatom bezeichnet.

7. Optisches Schaltelement unter Verwendung einer chiralen, smektischen Flüssigkristallzusammensetzung als Flüssigkristall, umfassend wenigstens eine optisch aktive Verbindung, dargestellt durch die allgemeine Formel (I)

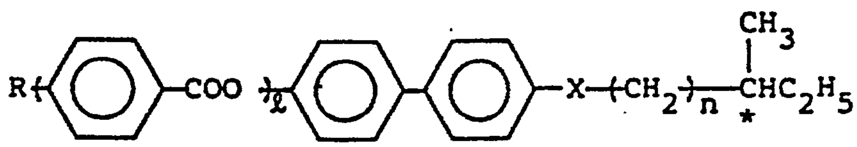 (I)

in der R eine Alkylgruppe mit 1 bis 18 Kohlenstoffatomen oder eine Alkyloxygruppe mit 1 bis 18 Kohlenstoffatomen ist, X eine einfachbindung oder -0- (ein Sauerstoffatom) ist, 1 0 oder 1 ist, wenn X eine einfachbindung ist, n eine ganze Zahl von 4 bis 12 ist, wenn X –0– und l = 0 ist, n eine ganze Zahl von 3 bis 12 ist, und wenn X –0– und l = 1 ist, n eine ganze Zahl von 2 bis 12 ist, und * das asymmetrische Kohlenstoffatom bezeichnet.

**Revendications**

1. Composé optiquement actif représenté par la formule générale (I):

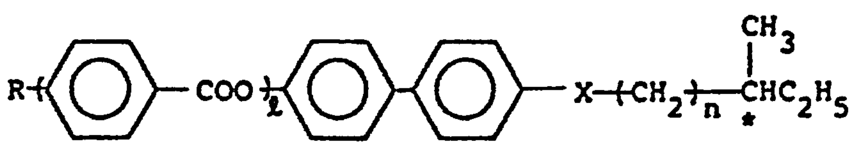 (I)

dans laquelle R est un groupe alkyle en C1 à C18 ou un groupe alkyloxy en C1 à C18, X est une simple liaison ou –0– (un atome d'oxygène, l est 0 ou 1, lorsque X est une simple liaison, n est un entier de 4 à 12, lorsque X est –0– et l= 0, n est un entier de 3 à 12 et lorsque X est –0– et l = 1, n est un entier de 2 à 12 et * indique que l'atome de carbone marqué d'un astérisque est un atome de carbone asymétrique.

2. Composé optiquement actif suivant la revendication 1, dans lequel X est une simple liaison, l est 0 et n est un entier de 4 à 12.

3. Composé optiquement actif suivant la revendication 1, dans lequel X est une simple liaison, l est 1 et n est un entier de 4 à 12.

4. Composé optiquement actif suivant la revendication 1, dans lequel X est –0–, l est 0 et n est un entier de 3 à 12.

5. Composé optiquement actif suivant la revendication 1, dans lequel X est –0–, l est 1 et n est un entier de 2 à 12.

6. Composition de cristal liquide smectique chiral comprenant au moins un composé optiquement actif, représenté par la formule générale (I):

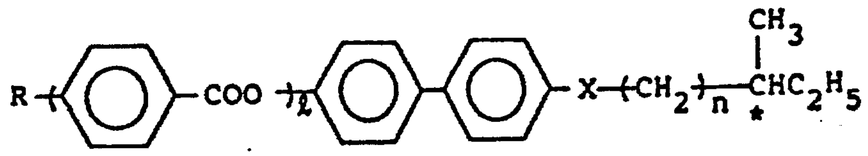 (I)

dans laquelle R est un groupe alkyle en C1 à C18 ou un groupe alkyloxy en C1 à C18, X est une simple liaison ou –0– (un atome d'oxygène, lest 0 ou 1, lorsque X est une simple liaison, n est un entier de 4 à 12, lorsque X est –0– et l = 0, n est un entier de 3 à 12 et lorsque X est –0– et l = 1, n est un entier de 2 à 12, et * indique que l'atome de carbone marqué d'un astérisque est un atome de carbone asymétrique.

7. Elément de commutation optique utilisant comme cristal liquide une composition de cristal liquide smectique chiral comprenant au moins un composé optiquement actif représenté par la formule générale (I):

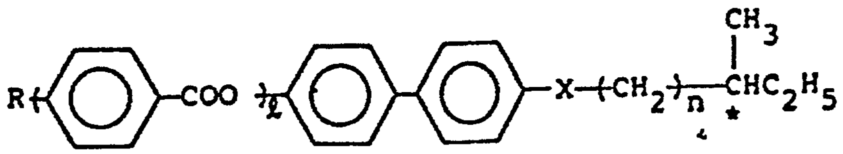 (I)

dans laquelle R est un groupe alkyle en C1 à C18 ou un groupe alkyloxy en C1 à C18, X est une simple liaison ou –0– (un atome d'oxygène), l est 0 ou 1, lorsque X est une simple liaison, n est un entier de 4 à 12, lorsque X est –0– et l = 0, n est un entier de 3 à 12, et lorsque X est –0– et l = 1, n est un entier de 2 à 12, et * indique que l'atome de carbone marqué d'un astérisque est un atome de carbone asymétrique.